# EUROPÄISCHE PATENTSCHRIFT

(11) **EP 2 330 070 B1**
(45) Veröffentlichungstag und Bekanntmachung des Hinweises auf die Patenterteilung: **09.05.2012**
(21) Anmeldenummer: 10015207.3
(22) Anmeldetag: 01.12.2010
(51) Int. Cl.: B66F 9/075, B66F 9/20, B62D 1/18

(54) **Verstelleinrichtung für eine Bedieneinrichtung eines Flurförderzeugs**
Adjustment device for an operating device of an industrial truck
Dispositif de réglage pour un dispositif de commande d'un chariot de manutention

(30) Priorität: 04.12.2009 DE 102009057028
(43) Veröffentlichungstag der Anmeldung: 08.06.2011
(73) Patentinhaber: KION Warehouse Systems GmbH, 72766 Reutlingen (DE)
(72) Erfinder: Lang, Andreas, 72070 Tübingen (DE)
(74) Vertreter: Geirhos, Johann

(56) Entgegenhaltungen:
- EP-A2- 1 857 404
- WO-A1-80/01478
- US-A- 3 737 003

## Beschreibung

Die Erfindung betrifft eine Verstelleinrichtung für eine Bedieneinrichtung eines Flurförderzeugs, insbesondere ein Bedienpult eines Kommissionierstaplers, wobei die Verstelleinrichtung als Verstellmöglichkeiten eine Höhenverstellung und eine Neigungsverstellung sowie eine Kippverstellung der Bedieneinrichtung aufweist.

Flurförderzeuge, insbesondere Kommissionierstapler, beispielsweise Hochregalstapler oder Hochregalkommissionierer bzw. Vertikalkommissionierer, weisen in der Regel eine als Bedienpult ausgebildetes Bedieneinrichtung auf, an dem alle Bedienelemente zur Bedienung des Flurförderzeugs vereint sind und mit dem alle Funktionen des Flurförderzeugs gesteuert werden können. An dem Bedienpult sind hierzu Bedienelemente zur Steuerung des Fahrantriebs und der Lasthandhabungsfunktionen des Flurförderzeugs sowie ein Lenkbetätigungselement angeordnet. Das Bedienpult ist hierzu an der der Last zugewandten Seite eines anhebbaren und absenkbaren Fahrerstands des Flurförderzeugs angeordnet, der auch als Fahrkorb bezeichnet wird. An dem Fahrkorb ist hierbei ein Lastaufnahmemittel befestigt, das beispielsweise von einer in Fahrzeuglängsrichtung angeordneten Lastgabel, oder einer Schwenkschubgabel bzw. einer Teleskopgabel ausgeführt sein kann. Während der Bedienung des Flurförderzeugs befindet sich die Bedienperson frontal hinter dem Bedienpult, so dass die Bedienperson mit beiden Händen auf das Bedienpult zugreifen kann. Insbesondere bei Hochregalstaplem, Hochregalkommissionierem oder Vertikalkommissionierer ist es auch bekannt, das einzige Bedienpult oder ein zusätzliches Bedienpult hubgerüstseitig, also an der der Last abgewandten Seite des Fahrerstandes anzuordnen.

Der als Fahrkorb ausgebildete Fahrerstand ist hierbei in der Regel mit einem Fahrersitz mit einer klappbaren Sitzfläche versehen, so dass die Bedienperson das Flurförderzeug im Stehen, im Sitzen und/oder in einer an den hochgeklappten Fahrersitz angelehnten Bedienposition mittels des Bedienpultes bedienen kann. Das Bedienpult ist oftmals mit einer Festhaltefunktion versehen, wobei in der Regel an der Bedienkonsole bzw. dem Bedienpult ein Haltegriff angeordnet ist, an dem sich die stehende Bedienperson zur sicheren Bedienung des Flurförderzeugs an dem Bedienpult festhalten kann.

Ein derartiges Bedienpult ist beispielsweise aus der DE 10 2005 049 100 A1 bekannt.

Aus der DE 10 2006 029 759 A1 ist ein Flurförderzeug mit einem anhebbaren bzw. absenkbaren Fahrkorb bekannt, das mit einem klappbaren Fahrersitz versehen ist und eine Bedienung im Stehen, im Sitzen sowie in einer angelehnten Position über ein Bedienpult ermöglicht. Aus der DE 10 2006 029 759 A1 ist zudem bereits bekannt, für das Bedienpult eine Verstelleinrichtung vorzusehen, um das Bedienpult zwischen einer ergonomisch günstigen Position für die sitzende Bedienperson und einer ergonomisch günstigen Position für die stehende Bedienperson zu verstellen.

Bei bekannten Verstelleinrichtungen ist das Bedienpult in fest vorgegebenen Führungsbahnen verstellbar, beispielsweise in der Höhe und in der Neigung, wobei verschiedene Verstell- und Auszugmöglichkeiten vorgesehen sind, um die gewünschte Position des Bedienpultes zu erreichen. Die unterschiedlichen Verstell- und Auszugsmöglichkeiten sind hierbei mittels jeweils einer Klemm- bzw. Arretierungseinrichtung versehen, die zum Verstellen des Bedienpultes betätigt werden müssen. Augrund der unterschiedlichen Verstell- und Auszugsmöglichkeiten und der für jede Verstellbewegung zu betätigenden Klemm- bzw. Arretierungseinrichtung weisen bekannte Verstelleinrichtungen jedoch einen hohen Bauaufwand auf und führen zu einer aufwändigen Verstellung des Bedienpultes.

Der vorliegenden Erfindung liegt die Aufgabe zugrunde, eine Verstelleinrichtung der eingangs genannten Gattung zur Verfügung zu stellen, die eine verbesserte Einstellbarkeit der Bedieneinrichtung und eine einfache Bedienung mit einer schnellen Verstellung ermöglicht.

Ein Bedienpult gemäß dem Oberbegriff des Anspruchs 1 ist aus dem WO 8001478 A bekannt.

Diese Aufgabe wird erfindungsgemäß dadurch gelöst, dass die Verstelleinrichtung zwei parallelogrammartig angeordnete und getrennt voneinander betätigbare Auszugsysteme umfasst, die jeweils einen Führungsabschnitt und einen linear zum Führungsabschnitt bewegbaren Auszugsabschnitt umfassen, wobei die Führungsabschnitte jeweils an einem Ende an einer Befestigungskonsole schwenkbar gelagert sind und die Auszugsabschnitte jeweils an einem gegenüberliegenden Ende an einer weiteren Befestigungskonsole schwenkbar gelagert sind. Mit einer derartigen Verstelleinrichtung, die zwei unabhängig voneinander ausziehbare bzw. zusammenschiebbare Auszugsysteme umfasst, die parallelogrammartig mit den Befestigungskonsolen gekoppelt sind, kann die Bedieneinrichtung frei in dem Verstellbereich bzw. Bewegungsraum und somit unabhängig von vorgegebenen Führungsbahnen für die Verstellbewegungen im Bewegungsraum verstellt und positioniert werden. Durch die beiden Auszugsysteme kann durch eine Linearbewegung der Auszugsabschnitte bezüglich der Führungsabschnitte eine Höhenverstellung der Bedieneinrichtung erzielt werden, wobei durch die schwenkbare Anordnung der Führungsabschnitte an der Befestigungskonsole eine Neigungsverstellung der Verstelleinrichtung erzielt werden kann. Die schwenkbare Anordnung der weiteren Befestigungskonsole an den beiden Auszugsabschnitten ermöglicht weiterhin, dass der Winkel der weiteren Befestigungskonsole unabhängig von dem Neigungswinkel der beiden Auszugsysteme verstellt werden kann, um beispielsweise eine Kippverstellung der Bedieneinrichtung zu erzielen. Die zusätzliche Kippverstellung ermöglicht es, eine an der Befestigungskonsole angebrachte Bedieneinrichtung zu verstellen, um beispielsweise Reflexionen an einem Display der Bedieneinrichtung aufgrund von Lichteinfall zu vermeiden. Mit der erfindungsgemäßen Verstelleinrichtung kann hierbei die Bedieneinrichtung frei im Bewegungsraum und somit im Verstellbereich verstellt werden und es können im Bewegungsraum alle beliebigen und gewünschten Positionen erreicht werden, wodurch die Bedieneinrichtung einfach und schnell an unterschiedliche Körpergrößen und unterschiedliche Bedienpositionen angepasst werden kann, beispielsweise eine Sitzposition einer auf dem Fahrersitz sitzenden Bedienperson, einer Standposition einer hinter der Bedieneinrichtung stehenden Bedienposition und/oder einer Anlehnposition, einer sich an dem hochgeklappten Fahrersitz anlehnenden Bedienperson.

Gemäß einer bevorzugten Ausgestaltungsform der Erfindung sind eine Befestigungskonsole zur Befestigung an dem Flurförderzeug und die weitere Befestigungskonsole zur Aufnahme der Bedieneinrichtung vorgesehen. Die mit den schwenkbaren Führungsabschnitten versehene Befestigungskonsole dient bevorzugt zur Befestigung der Verstelleinrichtung an einem Fahrerplatz des Flurförderzeugs. An der weiteren Befestigungskonsole, die an den beiden Auszugsabschnitten schwenkbar angeordnet ist, ist bevorzugt die von einem Bedienpult gebildete Bedieneinrichtung angeordnet. Hierdurch ergibt sich eine Verstelleinrichtung, bei der das Bedienpult mittels der parallelogrammartig angeordneten Auszugsysteme in der Höhe und im Neigungswinkel verstellt werden kann und über die an den beiden Führungsabschnitten schwenkbar angeordnete Befestigungskonsole der Winkel des Bedienpultes unabhängig von dem Neigungswinkel der beiden Auszugsysteme verändert werden kann, um eine Kippverstellung der Bedienpultes zu erzielen und beispielsweise bei Lichteinfall Reflexionen am Bedienpult und darin angeordneten Displays und Anzeigeeinrichtungen verhindern zu können.

Gemäß einer bevorzugten Ausführungsform der Erfindung sind die Schwenkachsen der beiden Führungsabschnitte und die Schwenkachsen der beiden Auszugsabschnitte jeweils bezüglich einer horizontalen Ebene, insbesondere bezüglich der entsprechenden Befestigungskonsole, geneigt angeordnet. Mit einer derartigen Kinematik und Anordnung der Schwenkachsen der beiden Führungsabschnitte und Auszugsabschnitte kann der Bewegungsraum optimal ausgenutzt werden und alle beliebigen Positionen im Bewegungsraum erreicht werden.

Gemäß einer bevorzugten Ausgestaltungsform der Erfindung sind die Auszugsysteme jeweils von einem im Querschnitt U-förmigen Führungsabschnitt und einem im Querschnitt U-förmigen Auszugsabschnitt gebildet. Dadurch ist ein einfacher Aufbau mit einem geringen Bauraumbedarf erzielbar, da der jeweilige Auszugsabschnitt in den zugeordneten Führungsabschnitt geschachtelt und ineianderlaufend angeordnet werden kann. Die U-förmigen Auszugsabschnitte und die U-förmigen Führungsabschnitte können hierbei mit geringem Herstellaufwand aus abgekanteten Blechteilen hergestellt werden.

Bevorzugt sind die beiden Auszugsysteme einander zugewandt angeordnet, so dass die Verstelleinrichtung insgesamt im Querschnitt einen rechteckförmigen Aufbau ergibt. Durch diese Anordnung der beiden Auszugssysteme wird im Inneren der Verstelleinrichtung ein rechteckförmiger Freiraum erzielt, in dem weitere Bauelemente und ein Kabelbaum für die Bedieneinrichtung geschützt angeordnet werden können.

Hinsichtlich eines einfachen Aufbaus der Auszugsysteme und leichter Bedienkräfte zum Verstellen der Verstelleinrichtung ergeben sich Vorteile, wenn gemäß einer bevorzugten Ausgestaltungsform der Erfindung die Führungsabschnitte mit in Auszugrichtung beabstandeten Führungseinrichtungen, insbesondere Führungsrollen oder Führungsbuchsen, versehen sind, die mit Führungsausnehmungen, insbesondere langlochartigen Führungsausnehmungen, der Auszugsabschnitte zusammenwirken. Derartige Rollenführungen als Linearführung der Auszugsysteme weisen einen einfachen Aufbau mit geringen Herstellkosten auf und ermöglichen weiterhin geringe Bedienkräfte. Es ist ebenfalls denkbar, als Linearführungen der Auszugsysteme Gleitführungen oder Teleskopschienen zu verwenden.

Bevorzugt sind die Führungseinrichtungen an den seitlichen Schenkeln der Führungsabschnitte und die Führungsausnehmungen an den seitlichen Schenkeln der Auszugsabschnitte angeordnet, wodurch eine einfache Führung und Lagerung der ausziehbaren Auszugsabschnitte an den zugeordneten Führungsabschnitten erzielt werden kann.

Sofern gemäß einer bevorzugten Weiterbildung der Erfindung zumindest zwischen einem seitlichen Schenkel eines Auszugsabschnitts und einem zugeordneten seitlichen Schenkel des Führungsabschnitts ein Abstandselement und/oder Gleitelement angeordnet ist, kann mit geringem Bauaufwand die Toleranz an den Führungseinrichtungen begrenzt werden.

Gemäß einer bevorzugten Weiterbildung der Erfindung ist für die beiden Auszugsysteme eine gemeinsame Verriegelungseinrichtung, insbesondere eine Klemmeinrichtung zur kraftschlüssigen Verklemmung, für alle Verstellmöglichkeiten vorgesehen, die mit einer Betätigungseinrichtung, insbesondere einem Klemmhebel, betätigbar ist. Mit einer derartigen gemeinsamen Klemmeinrichtung für die beiden Auszugsysteme, die durch lediglich einen Klemmhebel als Betätigungseinrichtung zu betätigen ist, können alle Verstellmöglichkeiten der erfindungsgemäßen Verstelleinrichtung mit nur einem Handgriff gelöst bzw. festgesetzt werden. Hierdurch ist ein schnelles Verstellen der Bedieneinrichtung in die gewünschte Position und eine einfache Bedienung der Verstelleinrichtung erzielbar.

Die Klemmeinrichtung kann gemäß einer Ausgestaltungsform der Erfindung zwei Klemmbacken aufweisen, wobei eine erste Klemmbacke mit den beiden Führungsabschnitten zusammenwirkt und an einem Führungsabschnitt befestigt ist, und eine zweite Klemmbacke mit den beiden Auszugsabschnitten zusammenwirkt und mittels der Betätigungseinrichtung gegen die erste Klemmbacke verspannbar ist. Die erste Klemmbacke bildet somit eine äußere Klemmbacke, die an einem Führungsabschnitt befestigt ist und auf die beiden Führungsabschnitte wirkt. Die innere Klemmbacke wirkt mit den beiden Auszugsabschnitten zusammen und wird von dem eingeschraubten Klemmhebel gehalten und mittels einer Verdrehsicherung gegen Verdrehen gesichert. Durch Betätigen des Klemmhebels können somit die beiden Klemmhebel im Sinne einer Backenbremse gegeneinander verspannt werden, wodurch die zwischen den beiden Klemmbacken angeordneten Führungsabschnitte und Auszugsabschnitte verklemmt werden.

Gemäß einer weiteren, bevorzugten Ausgestaltungsform der Erfindung weist die Klemmeinrichtung zwei Klemmstücke auf, die auf jeweils einem an einem Führungsabschnitt befestigten Bolzen gehaltert sind, wobei ein erstes Klemmstück gegen die Bolzen abgestützt ist und ein zweites Klemmstück mittels der Betätigungseinrichtung gegen die Auszugsabschnitte verspannbar ist. Mit einer derartigen Klemmeinrichtung, bei der die beiden Klemmstücke auf Bolzen gehaltert sind, wobei jeweils ein Bolzen an einem Führungsabschnitt befestigt ist, kann durch ein Auseinanderdrücken der beiden Klemmstücke durch die Betätigungseinrichtung im Bereich der Bolzen eine Klemmung erzielt werden, die hohe Klemmkräfte ermöglicht und eine Bewegung der beiden Führungsabschnitte der Auszugsysteme zueinander wirkungsvoll vermeidet. Mit einer derartigen Klemmeinrichtung kann eine sichere Festhaltefunktion für die Bedienperson an der Bedieneinrichtung erzielt werden.

Da sich bei einer Neigungsverstellung aufgrund der parallelogrammartigen Anordnung der beiden Auszugsysteme der Abstand der beiden Auszugssysteme und somit der Abstand der beiden mit den Bolzen versehenen Führungsabschnitte verändert, sind bevorzugt die Klemmstücke mit mindestens einer langlochartigen Ausnehmung zur Aufnahme eines Bolzens versehen. Die Abstandsänderung der beiden Führungsabschnitte kann mit derartigen Langlöchern in den Klemmstücken auf einfache Weise ausgeglichen werden.

Gemäß einer bevorzugten Weiterbildung der Erfindung sind die Bolzen Bestandteil der Führungseinrichtung. Die Klemmung wird somit im Bereich der Führungseinrichtung erzielt, so dass eine wirksame Verklemmung der beiden Auszugsysteme mit einem geringen Bauaufwand erzielbar ist.

Die Bolzen können hierbei direkt in die jeweilige langlochartigen Führungsausnehmungen des zugeordneten Auszugabschnittes eingreifen und somit gleichzeitig zur Führung der Auszugabschnitte verwendet werden. Sofern die Führungseinrichtung mit einer Führungsrolle oder einer Führungsbuchse versehen ist, kann der Bauaufwand weiter verringert werden, wenn die Bolzen zur Halterung der Führungsrolle bzw. Führungsbuchse ausgebildet sind.

Eine Verhinderung der Verdrehung und axialen Verschiebung der Bolzen in den Langlöchern der Klemmstücke kann durch gezahnte Sicherungsscheiben oder Schraubensicherungen erfolgen.

Gemäß einer bevorzugten Weiterbildung der Erfindung ist die Klemmeinrichtung mit einer Strebe versehen, die an einer Schwenkachse eines Führungsabschnitts schwenkbar angeordnet ist und den an dem weiteren Führungsabschnitt angeordneten Bolzen in einem Langloch aufnimmt. Mit einer derartigen Strebe kann die Stabilität der Klemmung und der Klemmeinrichtung weiter verbessert werden. Beim Betätigen der Klemmeinrichtung wird hierbei ebenfalls die Strebe verklemmt.

Hinsichtlich einer platzsparenden Anordnung der Klemmeinrichtung ergeben sich Vorteile, wenn die Klemmstücke und/oder die Strebe im Inneren der Verstelleinrichtung angeordnet sind.

Gemäß einer vorteilhaften Weiterbildung der Erfindung ist zur Unterstützung der Höhenverstellung eine Kraftunterstützungseinrichtung, insbesondere eine Gasdruckfeder, vorgesehen. Mit einer Gasdruckfeder kann mit geringem Bauaufwand und geringem Platzbedarf eine Kraftunterstützung der Höhenverstellung erzielt werden, um die Bedienung der Verstelleinrichtung komfortabler auszuführen. Es ist jedoch ebenfalls möglich, anstelle einer Gasdruckfeder eine alternative Kraftunterstützungseinrichtung vorzusehen, beispielsweise eine Federeinrichtung, einen Hydraulik- bzw. Pneumatikzylinder oder einen elektromotorischen Verstellantrieb.

Bevorzugt ist die Gasdruckfeder mit den beiden Befestigungskonsolen verbunden und beaufschlagt die Verstelleinrichtung in eine ausgefahrene Position der Höhenverstellung. Nach dem Lösen der Verriegelungs- bzw. Klemmeinrichtung wird die Verstelleinrichtung von der Gasdruckfeder in die ausgefahrene Position beaufschlagt. Hierdurch kann eine einfach aufgebaute, nicht blockierbare Gasdruckfeder als Kraftunterstützungseinrichtung verwendet werden, wobei beim Lösen der Klemmeinrichtung weiter vermieden wird, dass die Bedieneinrichtung aufgrund des Eigengewichts nach unten fällt. Ein derartiges Verhalten ist weiterhin hinsichtlich der Ergonomie für die Höhenerstellung günstig, da es für die Bedienperson komfortabler ist, die Bedieneinrichtung ausgehend von der ausgefahrenen Position entgegen der Kraft der Gasdruckfeder nach unten in die gewünschte Höhenposition zu verstellen.

Hinsichtlich eines günstigen Bauraumbedarfs ergeben sich Vorteile, wenn die Gasdruckfeder im Inneren der Verstelleinrichtung angeordnet ist.

Sofern gemäß einer vorteilhaften Weiterbildung der Erfindung eine Federeinrichtung vorgesehen ist, die die Verstelleinrichtung in eine Vorzugsstellung der Neigungsverstellung beaufschlagt, kann mit geringem Aufwand und auf einfache Weise beispielsweise ein selbständiges Aufrichten der Verstelleinheit in eine senkrechte Ausgangslage als Vorzugsstellung der Neigungsverstellung erzielt werden. Hierdurch kann eine Komfortsteigerung erzielt werden, da die Verstelleinrichtung nach dem Lösen der Verriegelungs- bzw. Klemmeinrichtung ausgehend von einer geneigten Stellung von der Federeinrichtung in die senkrechte Ausgangsstellung aufgerichtet wird. Ein derartiges selbstständiges Aufrichten der Verstelleinrichtung ergibt eine weitere Komfortsteigerung, wenn eine Bedienperson von einer sitzenden Bedienposition durch Aufstehen in eine stehende Bedienposition wechselt. Zudem wird durch eine derartige Federeinrichtung auf einfache Weise verhindert, dass die Bedieneinheit nach dem Lösen der Verriegelungs- bzw. Klemmeinrichtung aufgrund ihres Eigengewichts gegen einen Anschlag für die geneigte Position schlägt.

Die Federeinrichtung ist gemäß einer bevorzugten Ausgestaltungsform von mindestens einer Schenkelfeder gebildet, die mit der fahrzeugseitigen Befestigungskonsole und mit einem Auszugsystem, insbesondere dem Führungsabschnitt des Auszugssystems, in Wirkverbindung steht, um die Verstelleinrichtüng in eine aufgerichtete Vorzugstellung zu beaufschlagen. Mit einer derartigen Schenkelfeder kann mit geringem Bauaufwand ein Aufrichten der Verstelleinrichtung in die senkrechte Vorzugsstellung erzielt werden. Als Federeinrichtung kann alternativ zu einer Schenkelfeder ebenfalls eine Torsionsfeder oder eine Zugfeder verwendet werden.

Ein Verbindungskabel der Bedieneinrichtung ist mit einer entsprechenden Kabelschleife zu versehen, um bei der Höhenverstellung der Verstelleinrichtung ein ausreichendes Spiel und einen entsprechenden Kabelvorrat zu ermöglichen. Sofern ein Halter für die Kabelschleife des Verbindungskabels der Bedieneinrichtung vorgesehen ist, kann das Verbindungskabel auf einfache Weise um den Halter gelegt werden, um die Kabelschleife zu bilden.

Der Halter ist bevorzugt von einem im Inneren der Verstelleinrichtung angeordneten Haltstift gebildet, der an einem Führungsabschnitt befestigt ist. Hierdurch kann eine geschützte Anordnung des Verbindungskabels mit der Kabelschleife im Inneren der Verstelleinrichtung erzielt werden.

Um den Bewegungsraum der Verstelleinrichtung festzulegen, sind entsprechende Anschläge für die Verstellmöglichkeiten vorzusehen.

Die Anschläge der Höhenverstellung können auf einfache Weise von den langlochartigen Führungsausnehmungen und den Führungseinrichtungen gebildet werden, wodurch ein unterer Anschlag und ein oberer Anschlag der Höhenverstellung auf einfache Weise gebildet werden können. Durch die Länge der langlochartigen Führungsausnehmungen können Anschläge der Höhenverstellung auf einfache Weise gebildet werden.

Die Anschläge der Neigungsverstellung können auf einfache Weise gebildet werden, wenn zwischen einem stirnseitigen Bereich eines Führungsabschnitts und der fahrzeugseitigen Befestigungskonsole Anschläge für die Neigungsverstellung ausgebildet sind.

Gemäß einer alternativen Ausgestaltungsform der Erfindung, bei der die Klemmeinrichtung mit einer Strebe versehen ist, können die Anschläge der Neigungsverstellung von dem Langloch in der Strebe und dem in dem Langloch geführten Bolzen der Klemmeinrichtung gebildet werden. Durch entsprechende Bemessung der Länge des Langlochs in der Strebe können in Verbindung mit dem in dem Langloch geführten Bolzen der Klemmeinrichtung die Anschläge der Neigungsverstellung auf einfache Weise gebildet werden.

Die Anschläge für die Kippverstellung der Bedieneinrichtung können auf einfache Weise erzielt werden, wenn zwischen den stirnseitigen Bereichen der Auszugsabschnitte und der bedieneinrichtungsseitigen Befestigungskonsole jeweils ein Anschlag für die Kippverstellung ausgebildet ist.

Weitere Vorteile und Einzelheiten der Erfindung werden anhand der in den schematischen Figuren dargestellten Ausführungsbeispiele näher erläutert. Hierbei zeigt
- Figur 1: ein erfindungsgemäßes Flurförderzeug in einer Seitenansicht,
- Figur 2: den Fahrkorb des Flurförderzeugs mit einer erfindungsgemäßen Verstelleinrichtung,
- Figuren 3a bis 3d: den Bewegungsraum und die Verstelleinrichtung in verschiedenen Positionen,
- Figur 4: die erfindungsgemäße Verstelleinrichtung in einer perspektivischen Darstellung,
- Figur 5: die Verstelleinrichtung in einer Seitenansicht,
- Figur 6: den Schnitt entlang der Linie A-A der Figur 5,
- Figur 7a: den Schnitt entlang der Linie B-B der Figur 5,
- Figur 7b: eine Variante der Verstelleinrichtung in einem Schnitt entsprechend der Linie B-B der Figur 5,
- Figur 8: die Verstelleinrichtung in einem Längsschnitt,
- Figur 9: den Schnitt entlang der Linie C-C der Figur 5,
- Figur 10: einen Halbschnitt mit eingebauter Gasdruckfeder,
- Figur 11a, 11b: den oberen und unteren Befestigungspunkt der Gasdruckfeder,
- Figur 12: den Querschnitt durch ein Auszugsystem im Bereich der Führungseinrichtung,
- Figur 13: ein Auszugsystem mit einer Federeinrichtung in einer perspektivischen Darstellung und in einer Seitenansicht,
- Figur 14a: einen Querschnitt durch die Verstelleinrichtung mit einer ersten Ausführungsform einer Klemmeinrichtung,
- Figur 14b: eine Weiterbildung der Klemmeinrichtung gemäß der Figur 14a und
- Figur 15: einen Querschnitt durch die Verstelleinrichtung mit einer zweiten Ausführungsform einer Klemmeinrichtung.

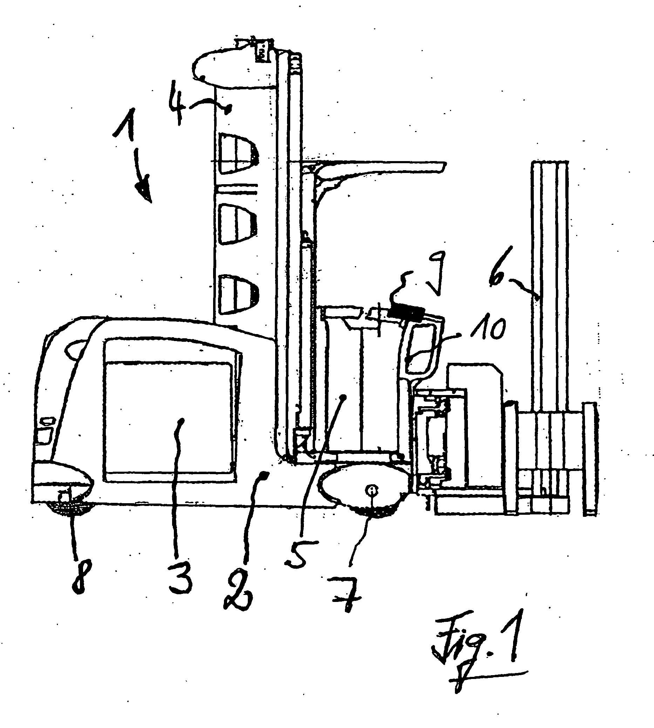

In der Figur 1 ist ein erfindungsgemäßer, als Hochregalflurförderzeug ausgebildeter Kommissionierstapler 1 als Beispiel eines Flurförderzeugs in einer Seitenansicht dargestellt. Das Flurförderzeug 1 weist einen Rahmen 2 auf, in dem ein Batteriefach zur Aufnahme einer beispielsweise als Antriebsbatterie ausgebildeten Energieversorgungseinheit 3 ausgebildet ist. Das Flurförderzeug 1 weist ein von einem Hubgerüst gebildetes Hubwerk 4 auf, an dem ein einen Fahrerstand bildender Fahrkorb 5 für eine Bedienperson auf- und abbewegbar angeordnet ist. An dem Fahrkorb 5 ist ein Lastaufnahmemittel 6 befestigt, das beispielsweise als Schwenkschubgabel ausgebildet ist.

Das Flurförderzeug 1 stützt sich mittels Laufrädern 7, die am frontseitigen Ende des Rahmens 2 angeordnet ist, und einem lenkbaren Antriebsrad 8, das Bestandteil einer Antriebsbaugruppe ist, die an dem heckseitigen Bereich des Rahmens 2 angeordnet ist, auf einer Fahrbahn ab.

Zur Bedienung des Flurförderzeugs durch die in dem Fahrkorb 5 befindliche Bedienperson ist eine mit Bedienelementen versehene, als Bedienpult ausgebildete Bedieneinrichtung 9 vorgesehen, die im Bereich einer vertikalen Brüstungswand 10 des Fahrkorbs 5 dem Lastaufnahmemittel 6 zugewandt mittels einer Verstelleinrichtung 11 an dem Fahrkorb 5 angeordnet ist. Es ist ebenfalls bei derartigen Kommissionierstaplern üblich und möglich, ergänzend oder alternativ ein Bedienpult an einer dem Hubwerk 4 zugewandeten vertikalen Brüstungswand des Fahrkorbs 5 anzuordnen.

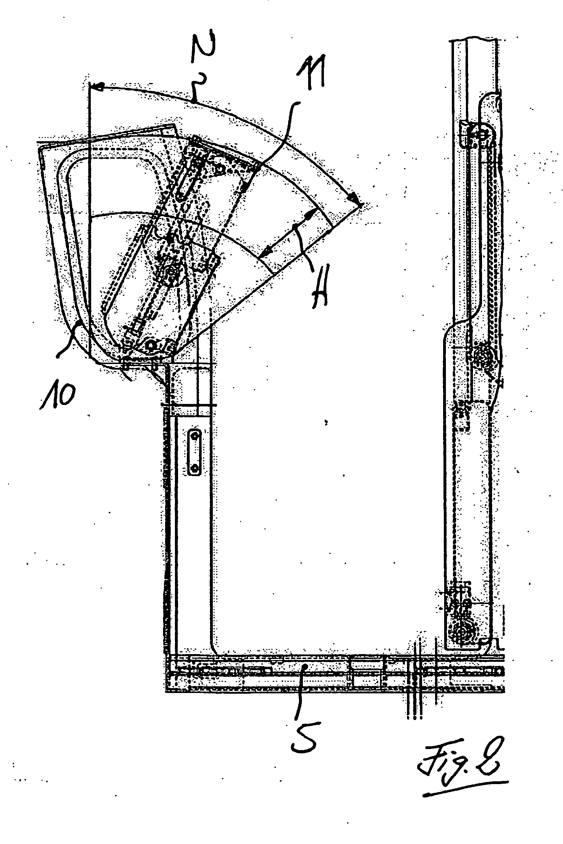

In der Figur 2 ist der als Fahrkorb 5 ausgebildete Fahrerstand mit der im Bereich der Brüstungswand 10 angeordneten Verstelleinrichtung 11 für die Bedieneinrichtung näher dargestellt. Die Verstelleinrichtung 11 ist im unteren Bereich an der Brüstungswand 10 befestigt und trägt im oberen Bereich die in der Figur 2 nicht näher dargestellte, als Bedienpult ausgebildete Bedieneinrichtung.

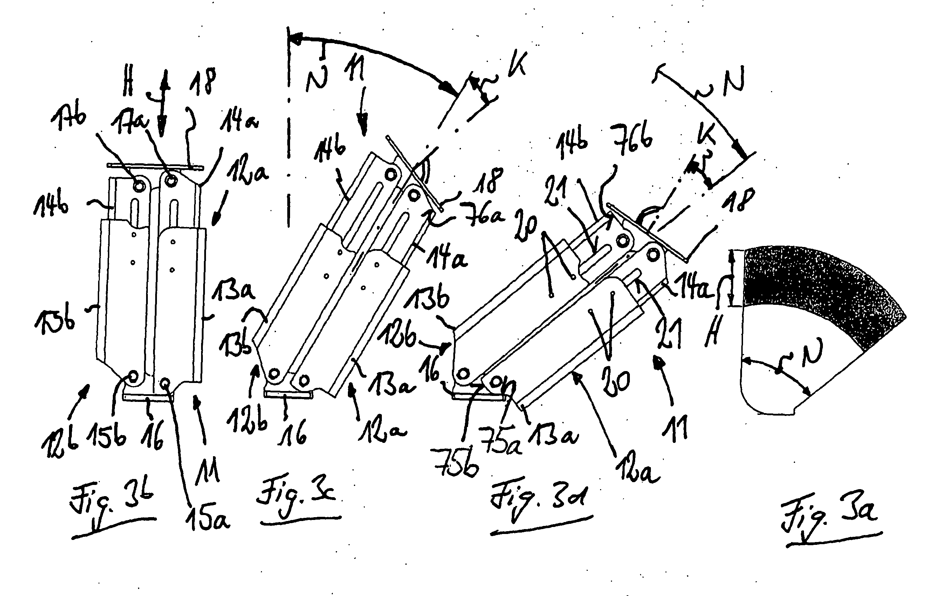

In der Figur 2 ist der Bewegungsraum und somit der Verstellbereich der Verstelleinrichtung 11 verdeutlicht, wobei die Höhenverstellbarkeit mit dem Maß H und die Neigungsverstellbarkeit mit dem Maß N angegeben ist. In der Figur 3a ist der Verstellbereich bzw. Bewegungsraum der Verstelleinrichtung 11 schematisch als grauer Bereich verdeutlicht.

Wie aus den Figuren 3b bis 3d ersichtlich ist, weist die erfindungsgemäße Verstelleinrichtung 11 zwei parallelogrammartig angeordnete, getrennt und somit unabhängig voneinander betätigbare Auszugssysteme 12a, 12b auf. Das Auszugsystem 12a ist hierbei der Bedienperson zugewandt angeordnet, entsprechend ist das Auszugssystem 12b der Bedienperson abgewandt angeordnet.

Jedes Auszugsystem 12a, 12b besteht aus einem unteren Führungsabschnitt 13a, 13b und einem oberen Auszugsabschnitt 14a, 14b, der linear zu dem Führungsabschnitt 13 bewegbar und somit ausziehbar bzw. einschiebbar ist. Die Führungsabschnitte 13a, 13b sind am unteren Ende jeweils um eine Schwenkachse 15a, 15b an einer Befestigungskonsole 16 schwenkbar angeordnet, mit der die Verstelleinrichtung 11 an der Brüstungswand 10 befestigbar ist. Die Auszugsabschnitte 14a, 14b sind am oberen Ende jeweils um eine Schwenkachse 17a, 17b an einer weiteren Befestigungskonsole 18 schwenkbar gelagert, die zur Aufnahme der als Bedienpult ausgebildeten Bedieneinrichtung 9 dient.

Die beiden unteren Schwenkachsen 15a, 15b sind bezüglich einer horizontalen Ebene geneigt angeordnet. Entsprechend sind die beiden oberen Schwenkachsen 17a, 17b bezüglich einer horizontalen Ebene geneigt angeordnet. Durch die Schwenkachsen 15a, 15b bzw. 17a, 17b verlaufende Verlängerungslinien schneiden sich auf der der Bedienperson abgewandten Seite.

In der Figur 3b ist die Verstelleinrichtung 11 in einer aufrechten Vorzugsstellung dargestellt. Durch die unabhängig voneinander ausziehbaren Auszugsysteme 12a, 12b kann eine Höhenverstellung H der Verstelleinrichtung 11, eine Neigungsverstellung N der Verstelleinrichtung 11 und eine zusätzliche Kippverstellung K der oberen Befestigungskonsole 18 erzielt werden. Die Kippverstellung K der Befestigungskonsole 18 ist hierbei als Neigung der oberen Befestigungskonsole 18 bezüglich der Neigungsachse der Verstelleinrichtung 11 definiert.

Wie aus den Figuren 3b bis 3d gezeigt ist, kann mit der von den beiden, unabhängig voneinander ausziehbaren Auszugsystemen 12a, 12b bestehenden Verstelleinrichtung 11 die Befestigungskonsole 18 frei im Bewegungsraum verstellt werden und somit die an der Befestigungskonsole 18 angeordnete Bedieneinrichtung in jeder beliebigen und gewünschten Position in dem Verstellbereich eingestellt und positioniert werden.

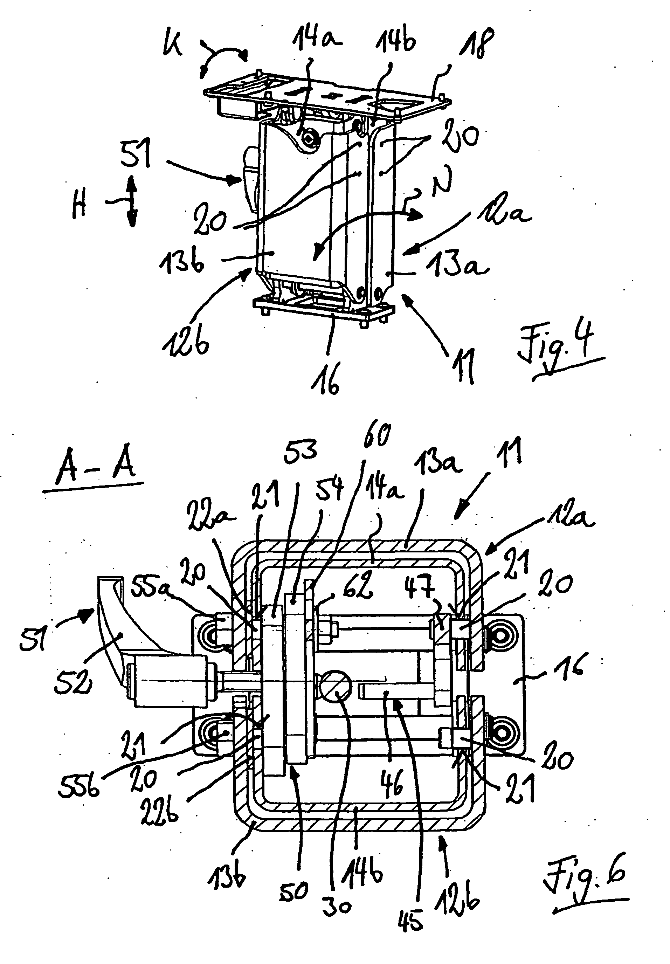

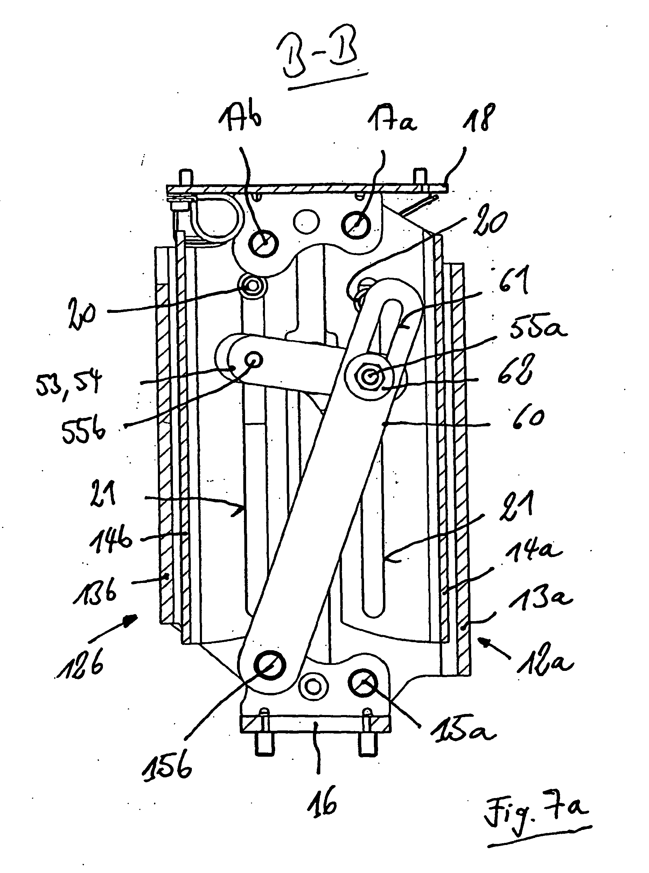

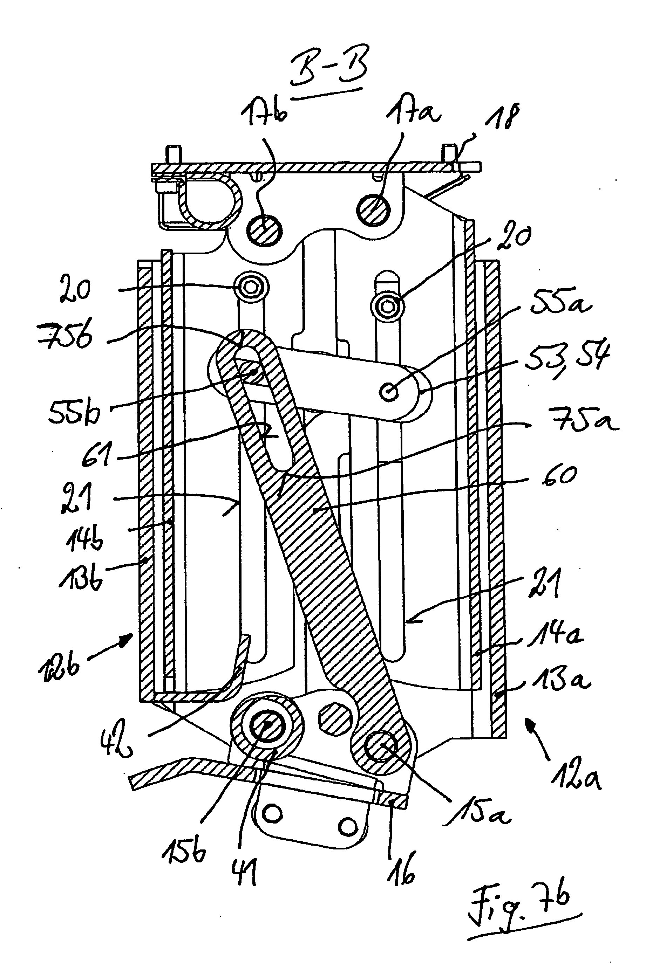

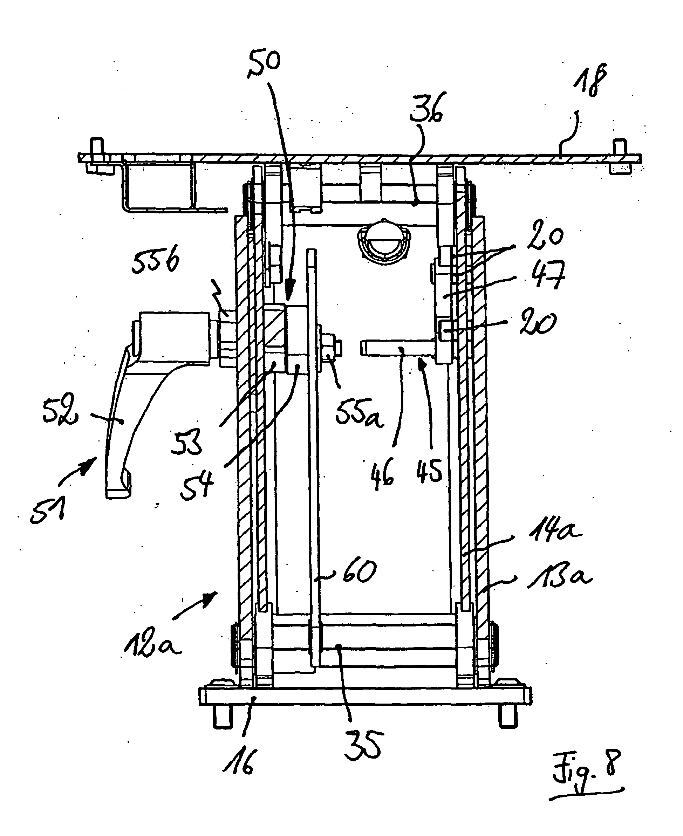

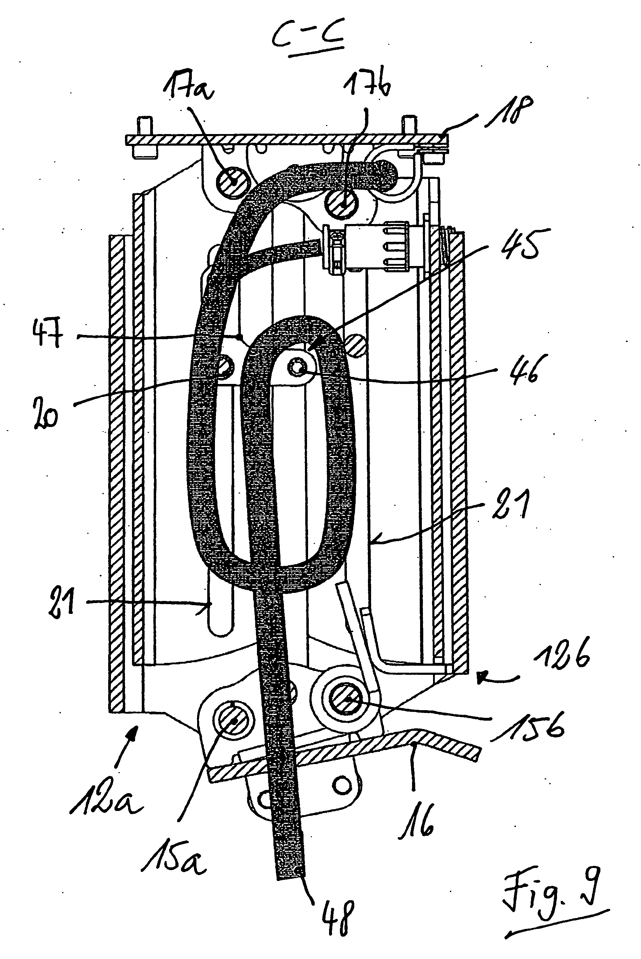

In den Figuren 4 bis 15 sind konstruktive Ausführungsformen und Einzelheiten einer erfindungsgemäßen Verstelleinrichtung 11 gezeigt. Die beiden Varianten der Verstellvorrichtung gemäß den Figuren 7a und 7b unterscheiden sich im Aufbau maßgeblich durch die Ausgestaltung der Befestigungskonsole 16, mit der die Verstellvorrichtung an der Brüstungswand 10 befestigbar ist.

Wie aus der Figur 6 ersichtlich ist, in der ein Querschnitt durch die Verstelleinrichtung 11 dargestellt ist, weisen die Führungsabschnitte 13a, 13b und die Auszugsabschnitte 14a, 14b der beiden Auszugsystem 12a, 12b jeweils einen U-förmigen Querschnitt auf, die ineinanderlaufend angeordnet sind. Die beiden Auszugsystem 12a, 12b sind hierbei einander zugewandt angeordnet und bilden einen rechteckförmigen Querschnitt, so dass im Inneren der Verstelleinrichtung 11 ein rechteckförmiger Innenraum ausgebildet ist.

Zur linearen Führung und Lagerung der Auszugsabschnitte 14a, 14b an dem jeweiligen Führungsabschnitt 13a, 13b sind die Führungsabschnitte 13a, 13b an den beiden seitlichen Schenkel der U-Profile jeweils mit zwei in Auszugrichtung beabstandeten Führungseinrichtungen 20 versehen, die mit langlochartigen bzw. nutförmigen Führungsausnehmungen 21 zusammenwirken, die in den seitlichen Schenkel der U-Profile der Auszugsabschnitte 14a, 14b angeordnet sind.

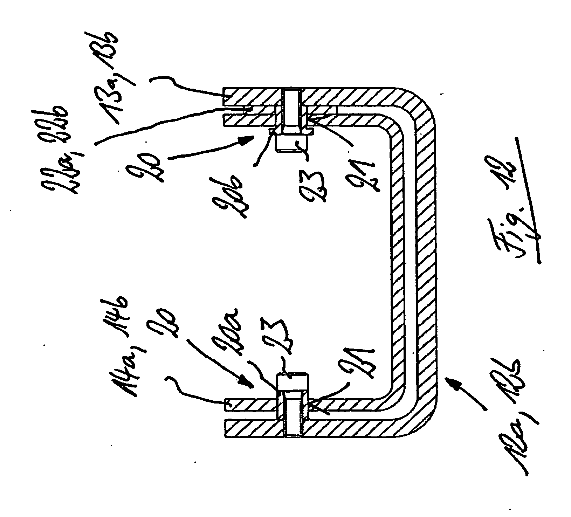

Wie aus der Figur 12. ersichtlich ist, in der die Führungseinrichtungen 20 an einem Auszugsystem 12a bzw. 12b im Schnitt dargestellt ist, sind hierbei an einer Profilseite zylinderförmige Führungsbuchsen 20a und an der gegenüberliegenden Profilseite bundförmige Führungsbuchsen 20b an den seitlichen Schenkeln der U-förmigen Führungsabschnitten 13a, 13b befestigt. Die Führungsbuchsen 20a, 20b greifen jeweils in die langlochartigen Führungsausnehmungen 21 ein, die in den seitlichen Schenkeln der Auszugsabschnitte 14a, 14b angeordnet sind, um die Auszugsabschnitte 14a, 14b an den Führungsabschnitten 13a, 13b linear zu führen. Die Führungsbuchsen 20a, 20b können hierbei beispielsweise mittels entsprechender Befestigungsschrauben 23 an den Schenkeln der Führungsabschnitte 13a, 13b befestigt werden. Um die seitliche Toleranz und das seitliche Spiel zu verringern, ist im Bereich der bundförmigen Führungsbuchsen 20b zwischen den seitlichen Schenkeln des Führungsabschnitts 13a bzw. 13b und des Auszugsabschnitts 14a bzw. 14b an jedem Auszugsystem 12a, 12b ein Gleitelement 22a, 22b angeordnet.

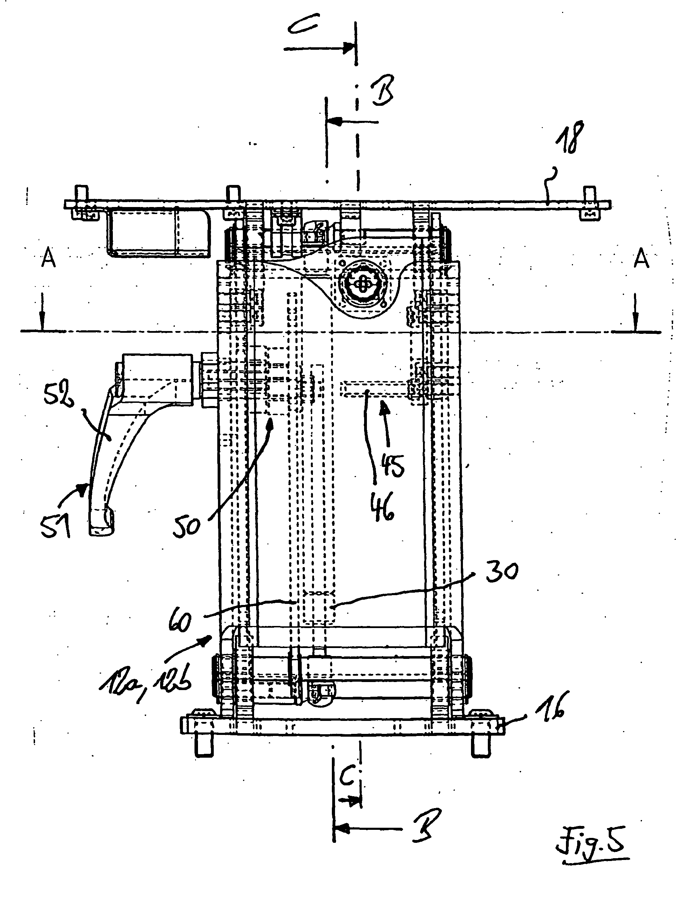

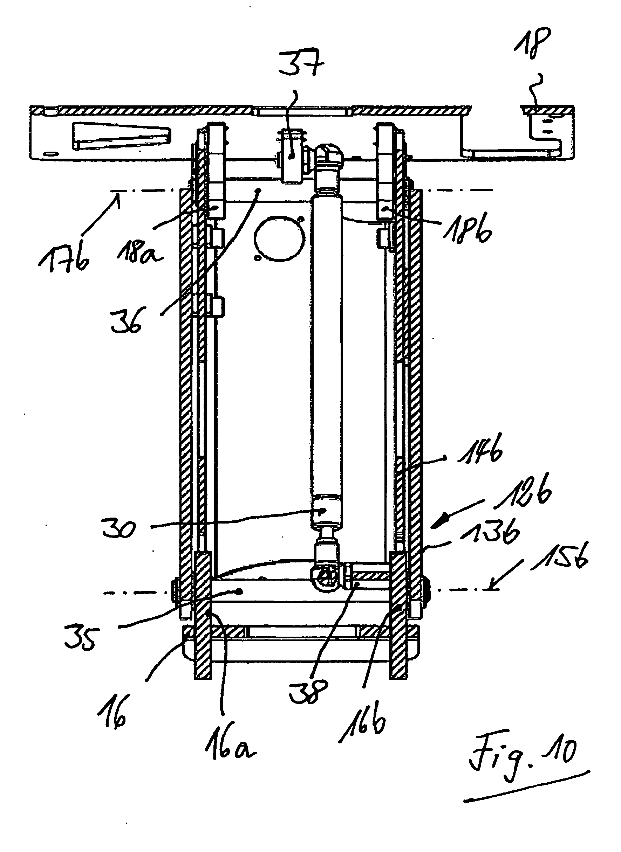

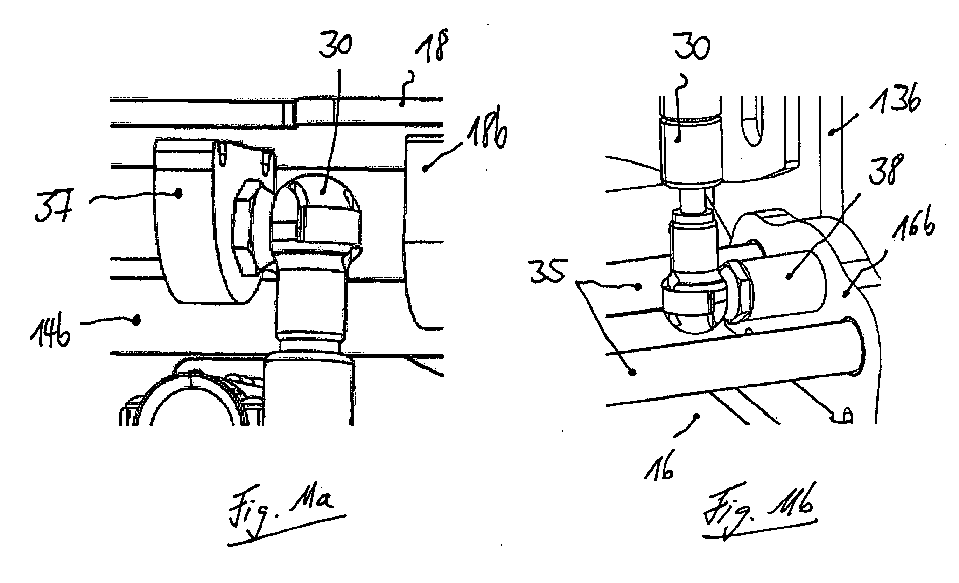

Zur Unterstützung der Höhenverstellung ist eine als Gasdruckfeder 30 ausgebildete Kraftunterstützungsvorrichtung vorgesehen, die in der Figur 5 gestrichelt und in den Figuren 10, 11 a, 11 b näher dargestellt ist. Die Gasdruckfeder 30 ist mit gegenüberliegenden Enden an den Befestigungskonsolen 16, 18 befestigt und als nicht vorgespannte Gasdruckfeder ausgebildet, die die Verstelleinrichtung 11 in eine ausgefahrene Stellung beaufschlagt. Die Gasdruckfeder 30 ist hierbei im Inneren der Verstelleinrichtung 11 angeordnet.

In der Figur 10 sind weiterhin die Befestigungskonsolen 16, 18 näher dargestellt, die jeweils seitliche Flanschplatten 16a, 16b bzw. 18a, 18b aufweisen, in denen die Führungsabschnitte 12a, 12b bzw. die Auszugsabschnitte 14a, 14b mittels entsprechender unterer Schwenkbolzen 35 bzw. oberer Schwenkbolzen 36 um die jeweiligen Schwenkachsen 15a, 15b bzw. 17a, 17b schwenkbar gelagert sind. In der Figur 10 sind weiterhin die unteren Schwenklager 15a. 15b und die oberen Schwenklager 17a, 17b der beiden Auszugsystem 12a, 12b näher dargestellt. Die unteren Schwenklager 15a, 15a sind von entsprechenden Aufnahmebohrungen in den Flanschplatten 16a, 16b der Befestigungskonsole 16 und entsprechende Aufnahmebohrungen in den seitlichen Schenkeln der Führungsabschnitte 13a, 13b gebildet, in denen jeweils ein entsprechender Schwenkbolzen 35 angeordnet ist. Die oberen Schwenklager 17a, 17b sind entsprechend von Aufnahmebohrungen in den Flanschplatten 18a, 18b der Befestigungskonsole 18 und Aufnahmebohrungen in den seitlichen Schenkeln der Auszugsabschnitte 14a, 14b gebildet, in denen jeweils ein entsprechender Schwenkbolzen 36 angeordnet ist. An den Schwenklagern 15a, 15b, 17a, 17b können Gleitlagerbuchsen zur Verminderung der Reibung angeordnet werden.

Wie aus der Figur 11a ersichtlich ist, ist die Gasdruckfeder 30 mit dem oberen Ende mittels einer Adapterplatte 37 an der oberen Befestigungskonsole 18 befestigt. In der Figur 11 b ist die untere Befestigung des unteren Endes der Gasdruckfeder 30 an der unteren. Befestigungskonsole 16 dargestellt, die über eine Distanzstück 38 an der Flanschplatte 16b erfolgt.

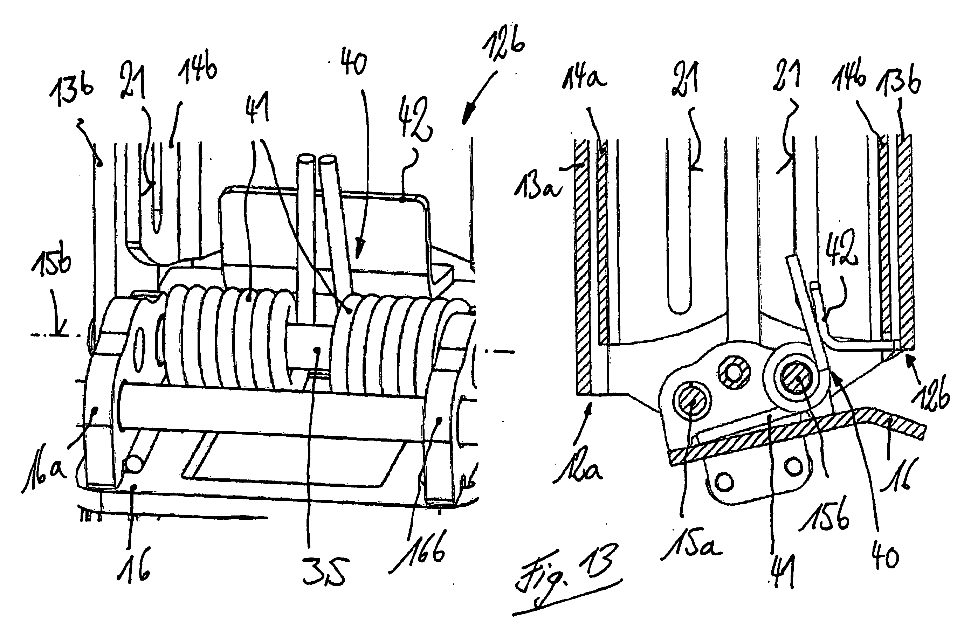

Die erfindungsgemäße Verstelleinrichtung ist mittels einer in der Figur 13 dargestellten Federeinrichtung 40 in die aufrechte Vorzugstellung der Neigungsverstellung, die in der Figur 3b dargestellt ist, vorgespannt. Die Federeinrichtung 40 ist hierbei von einer oder mehreren Schenkelfedern 41 an dem unteren Schwenklager 15b gebildet, die auf den unteren Schwenkbolzen 35 aufgesteckt sind und mit einem ersten Federschenkel mit der unteren Befestigungskonsole 16 sowie mit einem zweiten Federschenkel mit dem Führungsabschnitt 13b des Auszugsystems 12b zusammenwirkt. Der Führungsabschnitt 13b kann hierbei im unteren Bereich im Bereich der die beiden Schenkel verbindenden Stegfläche mit einer winkelförmigen Abstützfläche 42 für den Federschenkel der Schenkelfeder 41 versehen sein. Im dargestellten Ausführungsbeispiel besteht die Federeinrichtung 40 aus zwei Federn 41, die bevorzugt unterschiedlich gewickelt sind. Die Breite der beiden Federn 41 ist hierbei derart bemessen, dass die Federn 41 den Einbauraum zwischen den beiden Flanschplatten 16a, 16b der Befestigungskonsole 16 im Wesentlichen ausfüllen, so dass sich die beiden Federn 41 gegenseitig gegen ein axiales Verschieben auf dem Schwenkbolzen 35 sichern.

In den Figuren 5, 6, 8 und 9 ist weiterhin ein Halter 45 für eine Kabelschleife eines als Kabelbaum ausgebildeten Verbindungskabels 48 der Bedieneinrichtung dargestellt. Der Halter 45 ist von einem im Inneren der Verstelleinrichtung 11 angeordneten Haltestift 46 gebildet, der mittels eines Befestigungswinkels 47 an einem Führungsabschnitt 13a bzw. 13b befestigt ist. In der dargestellten Ausführungsform ist der Befestigungswinkel 47 an dem Führungsabschnitt 13a befestigt und hierzu beispielsweise an den Führungsbuchsen 20a der Führungseinrichtung 20 für den Auszugsabschnitt 14a befestigt.

In den Figuren 5 bis 8 und 14a, 14b ist eine bevorzugte Ausführungsform einer gemeinsamen, als Klemmeinrichtung ausgebildeten Verriegelungseinrichtung 50 für alle Verstellmöglichkeiten dargestellt, die mit einer als Klemmhebel 52 ausgebildeten Betätigungseinrichtung 51 betätigbar ist.

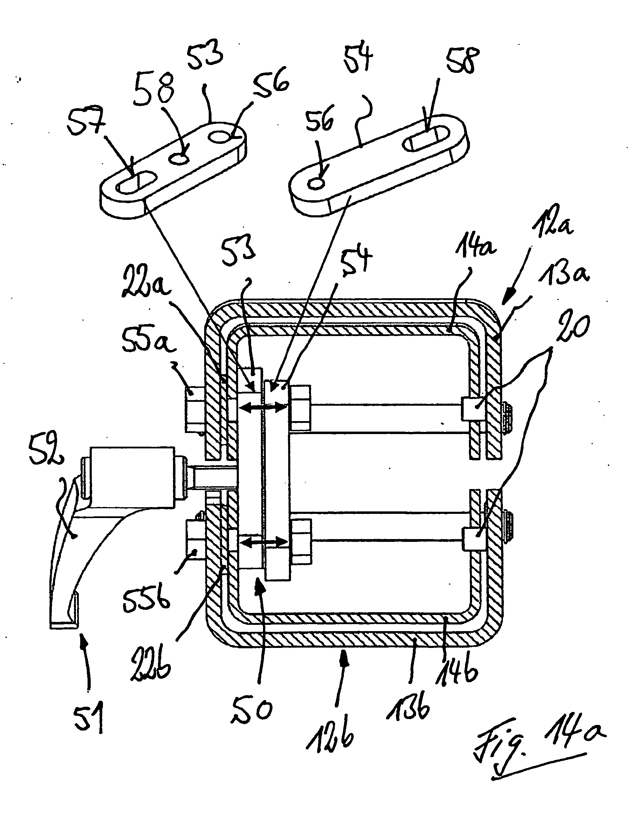

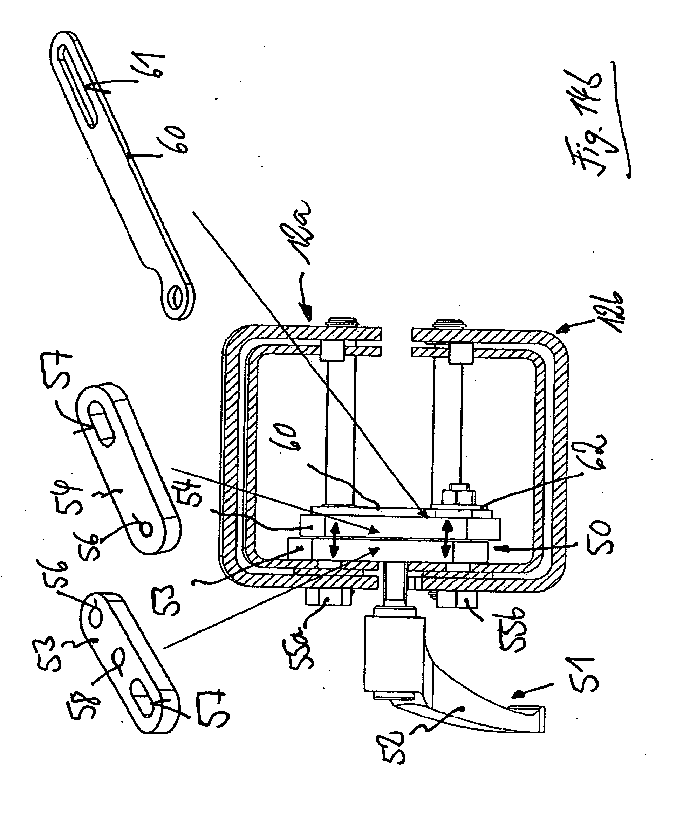

Die Klemmeinrichtung weist - wie insbesondere in den Figuren 6 und 14a sowie 14b dargestellt ist - zwei plattenförmige Klemmstücke 53, 54 auf, die auf Bolzen 55a, 55b aufgesteckt sind, die in den Führungsabschnitten 13a, 13b der Auszugssysteme 12a, 12b befestigt sind. Der Bolzen 55a ist hierbei in dem Führungsabschnitt 13a des Auszugsystems 12a befestigt und dient weiterhin als Führung der Führungseinrichtung bzw. zur Befestigung der bundförmige Führungsbuchse 20b der Führungseinrichtung. Entsprechend ist der Bolzen 55b in dem Führungsabschnitt 13b des Auszugsystems 12b befestigt und dient weiterhin als Führung der Führungseinrichtung bzw. zur Halterung der entsprechenden bundförmigen Führungsbuchse 20b der Führungseinrichtung.

Die Klemmstücke 53, 54 weisen zum Aufstecken auf die Bolzen 55a, 55b jeweils eine Aufnahmebohrung 56 und eine langlochartige Ausnehmung 57 auf, um die Abstandänderung der beiden Auszugsysteme 12a, 12b bei einer Neigungsverstellung auszugleichen. Die beiden Klemmstücke 53, 54 sind hierbei gegensinnig angeordnet, d.h. das Klemmstück 53 ist mit dem Aufnahmebohrung 56 auf den Bolzen 55a aufgesteckt, wobei der Bolzen 55b in der Ausnehmung 57 geführt ist, und das Klemmstück 54 ist mit der Aufnahmebohrung 56 auf den Bolzen 55b ausgesteckt, wobei der Bolzen 55a in der Ausnehmung 57 geführt ist.

Die Klemmstücke 53, 54 sind im Inneren der Verstelleinrichtung 11 angeordnet, wobei sich das innere, erste Klemmstück 54 an Muttern oder Schraubenköpfen bzw. einem Bund der Bolzen 55a, 55b abstützt und das äußere, zweite Klemmstück 53 mit den beiden Auszugsabschnitten 14a, 14b jeweils im Bereich eines seitlichen Schenkels zusammenwirkt. Der Klemmhebel 52, der sich mit einem Gewindeabschnitt durch den Freiraum zwischen den beiden Auszugssystemen 12a, 12b erstreckt, ist in eine entsprechende Gewindeaufnahme 58 des äußeren Klemmstück 53 eingeschraubt und stützt sich mit der Stirnseite an dem inneren Klemmstück 54 ab. Durch Betätigen und Anziehen des Klemmhebels 52 können somit die Klemmstücke 53, 54 auseinandergedrückt werden - wie in den Figur 14a, 14b durch die Doppelpfeile angedeutet -, wobei sich das Klemmstück 54 an den Bolzen 55a, 55b abstützt und entsprechend das Klemmstück 53 nach Außen an die beiden Auszugsabschnitte 14a, 14b im Bereich der seitlichen Schenkel gedrückt wird, wodurch eine Klemmung der beiden Auszugsabschnitte 14a, 14b sowie der beiden Führungsabschnitte 13a 13b und somit eine gemeinsame Klemmung der beiden Auszugsysteme 12a, 12b im Bereich der Bolzen 55a, 55b erzielt wird. Hierbei können hohe Klemmkräfte erzielt werden, bei denen eine Bewegung der beiden Auszugsystem 12a, 12b zueinander wirksam vermieden werden kann, wodurch im geklemmten Zustand eine sichere Festhaltefunktion der Bedienperson an der Bedieneinrichtung erzielt werden kann. Durch entsprechendes Lösen des Klemmhebels 52 kann die gemeinsame Klemmung der Auszugsysteme 12a, 12b zur Verstellung der Verstelleinrichtung 11 gelöst werden.

Gemäß einer Weiterbildung der Erfindung ist eine in den Figuren 6, 7a, 7b, 8 und 14 dargestellte Strebe 60 vorgesehen. Gemäß der Figur 7a ist die Strebe 60 an einer unteren Schwenkachse 15b des Auszugsystems 12b schwenkbar gelagert ist und nimmt in einem Langloch 61 den Befestigungsbolzen 55a der Klemmeinrichtung 50 auf. In der Figur 7b ist eine gegensinnige Anordnung der Strebe 60 gezeigt, wobei die Strebe 60 an der unteren Schwenkachse 15a des Auszugsystems 12a schwenkbar gelagert ist und in einem Langloch 61 den Befestigungsbolzen 55b der Klemmeinrichtung 50 aufnimmt.

Der Bolzen 55a bzw. 55b ist hierbei mittels einer Scheibe 62 an der Strebe 60 abgestützt, so dass beim Verklemmen der Klemmstücke 53, 54 weiterhin die Strebe 60 mitverklemmt wird. Der Bolzen 55a bzw. 55b ist somit in dem Langloch 61 der Strebe 60 fixiert, so dass die Neigung nicht mehr verstellt werden kann. Das Auszugsystem 12a, 12b wird somit fixiert. Die Strebe 60 ist hierbei ebenfalls innerhalb der Verstelleinrichtung 11 angeordnet.

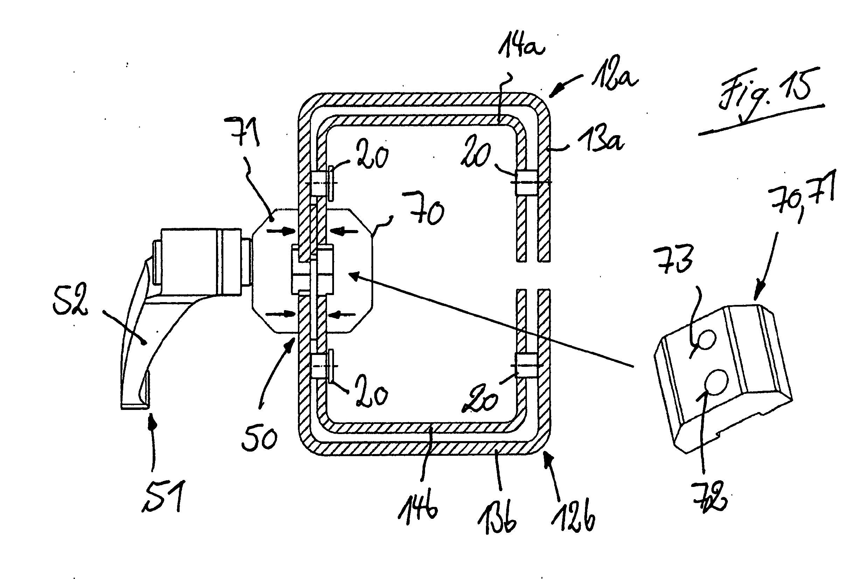

In der Figur 15 ist eine zweite Ausführungsform einer gemeinsamen als Klemmeinrichtung ausgebildeten Verriegelungseinrichtung 50 für alle Verstellmöglichkeiten dargestellt, die mit einer als Klemmhebel 52 ausgebildeten Betätigungseinrichtung 51 betätigbar ist. Die Klemmeinrichtung 50 weist eine innere, zweite Klemmbacke 70 auf, die mit den beiden Auszugsabschnitten 14a, 14b im Bereich der seitlichen Schenkel zusammenwirkt, und eine äußere, erste Klemmbacke 71 auf, die mit den beiden Führungsabschnitten 12a, 12b im Bereich der seitlichen Schenkel zusammenwirkt. Die äußere Klemmbacke 71 ist an einem der beiden Führungsabschnitte 13a bzw. 13b befestigt. Der mit dem Gewindeabschnitt in dem Freiraum zwischen den beiden Auszugsystemen 12a, 12b angeordnete Klemmhebel 52 erstreckt sich durch eine Durchgangsbohrung 72 der äußeren Klemmbacke 71 und ist in eine Gewindeaufnahme 72 der inneren Klemmbacke 70 eingeschraubt, um die innere Klemmbacke 70 zu haltern. Ein in eine Aufnahmebohrung 73 der inneren Klemmbacke 70 angeordneter, nicht näher dargestellter Zylinderstift, der sich durch den Freiraum zwischen den beiden Auszugsystemen 12a, 12b erstreckt und in einer entsprechende Aufnahmebohrung 73 der äußeren Klemmbacke 71 eingesteckt ist, dient als Verdrehsicherung der inneren Klemmbacke 70. Durch Betätigen und Anziehen der Klemmschraube 52 können somit die Klemmbacken 70, 71 gegeneinander verspannt werden, um die beiden Auszugsabschnitte 14a, 14b und die beiden Führungsabschnitte 13a, 13b und somit beide Auszugsysteme 12a, 12b im Bereich der seitlichen Schenkel zu verklemmen.

Wie aus der Figur 3d zu entnehmen ist, bilden die langlochartigen Führungsausnehmungen 21 in den Auszugsabschnitten 14a, 14b in Verbindung mit den Führungseinrichtungen 20 in den Führungsabschnitten 13a, 13b jeweils einen oberen und unteren Anschlag für die Auszugbewegung des entsprechenden Auszugsystems 12a, 12b und somit einen oberen und unteren Anschlag der Höhenverstellung H.

An einer unteren Stirnseite des Führungsabschnitts 13a des Auszugsystems 12a, insbesondere im Bereich der seitlichen Schenkel des Führungsabschnitts 13a sind Anschlagflächen 75a, 75b ausgebildet, die mit der unteren Befestigungskonsole 16 zusammenwirken, um entsprechende Anschläge für die Neigungsverstellung N zu bilden. Die Anschlagfläche 75a bildet hierbei einen vorderen Anschlag bei Neigung der Verstelleinrichtung 11 in Richtung zur Bedienperson. Entsprechend bildet die Anschlagfläche 75b einen hinteren Anschlag bei Neigung der Verstelleinrichtung 11 von der Bedienperson weg. Derartige Anschläge können bevorzugt bei einer im Wesentlichen horizontalen Anordnung der Befestigungskonsole 16 gemäß der Figur 7a vorgesehen werden.

Die Anschläge der Neigungsverstellung N können alternativ von der Erstreckung des Langlochs 61 in der Strebe 60 gebildet werden, die mit dem entsprechenden Bolzen 55a bzw. 55b, sofern eine Klemmeinrichtung mit der Strebe 60 vorgesehen ist. Entsprechende Anschlagflächen 75a, 75b an dem Langloch 61 als Anschläge für die Neigung sind in der Figur 7b dargestellt. Derartige Anschläge sind bevorzugt bei einer geneigt angeordneten Befestigungskonsole 16 gemäß der Figur 7b vorgesehen.

Zur Begrenzung der Kippverstellung K der oberen Befestigungskonsole 18 nach vorne in Richtung zur Bedienperson ist an der oberen Stirnseite des Auszugsabschnitts 14a, insbesondere im Bereich der seitlichen Schenkel des Auszugsabschnittes 14a eine in der Figur 3c dargestellte Anschlagfläche 76a ausgebildet, die mit der Befestigungskonsole 18 zusammenwirkt. Entsprechend ist zur Begrenzung der Kippverstellung K der oberen Befestigungskonsole 18 nach hinten in Richtung von der Bedienperson weg an der oberen Stirnseite des Auszugsabschnitts 14b, insbesondere im Bereich der seitlichen Schenkel des Auszugsabschnittes 14b eine in der Figur 3d dargestellte Anschlagfläche 76b ausgebildet, die mit der Befestigungskonsole 18 zusammenwirkt.

Die erfindungsgemäße Verstelleinrichtung 11 ermöglicht bei einem einfachen Aufbau durch die Höhenverstellung H, die Neigungsverstellung N und die Kippverstellung K eine freie Verstellbarkeit und eine beliebige, gewünschte Positionierbarkeit der an der Befestigungskonsole 18 angeordneten Bedieneinrichtung im Verstellbereich. Durch die Gasdruckfeder 30 und die Federeinrichtung 40 weist die Verstelleinrichtung 11 einen hohen Bedienungskomfort auf. Durch die gemeinsame Klemmeinrichtung 50 für alle Verstellmöglichkeiten H, N, K mit lediglich einem als Klemmhebel 52 ausgebildeten Betätigungseinrichtung 51 ist die Verstelleinrichtung 11 einfach und schnell mit wenigen Handgriffen zu bedienen und somit zu verstellen, um die Bedieneinrichtung an unterschiedliche Bedienpositionen und unterschiedliche Körpergrößen anzupassen.

## Patentansprüche

1. Verstelleinrichtung für eine Bedieneinrichtung eines Flurförderzeugs, insbesondere ein Bedienpult eines Kommissionierstaplers, wobei die Verstelleinrichtung als Verstellmöglichkeiten eine Höhenverstellung und eine Neigungsverstellung sowie eine Kippverstellung der Bedieneinrichtung aufweist, **dadurch gekennzeichnet, dass** die Verstelleinrichtung (11) zwei parallelogrammartig angeordnete und getrennt voneinander betätigbare Auszugsysteme (12a, 12b) umfasst, die jeweils einen Führungsabschnitt (13a; 13b) und einen linear zum Führungsabschnitt (13a; 13b) bewegbaren Auszugsabschnitt (14a; 14b) umfassen, wobei die Führungsabschnitte (13a; 13b) jeweils an einem Ende an einer Befestigungskonsole (16) schwenkbar gelagert sind und die Auszugsabschnitte (14a; 14b) jeweils an einem gegenüberliegenden Ende an einer weiteren Befestigungskonsole (18) schwenkbar gelagert sind.

2. Verstelleinrichtung nach Anspruch 1, **dadurch gekennzeichnet, dass** eine Befestigungskonsole (16) zur Befestigung an dem Flurförderzeug und die weitere Befestigungskonsole (18) zur Aufnahme der Bedieneinrichtung vorgesehen ist.

3. Verstelleinrichtung nach Anspruch 1 oder 2, **dadurch gekennzeichnet, dass** die Schwenkachsen (15a; 15b) der beiden Führungsabschnitte (13a; 13b) und die Schwenkachsen (17a; 17b) der beiden Auszugsabschnitte (14a; 14b) jeweils bezüglich einer horizontalen Ebene, insbesondere bezüglich der entsprechenden Befestigungskonsole (16; 18), geneigt angeordnet sind.

4. Verstelleinrichtung nach einem der Ansprüche 1 bis 3, **dadurch gekennzeichnet, dass** die Auszugsysteme (12a; 12b) jeweils von einem im Querschnitt U-förmigen Führungsabschnitt (13a; 13b) und einem im Querschnitt U-förmigen Auszugsabschnitt (14a; 14b) gebildet sind, die ineinanderlaufend angeordnet sind.

5. Verstelleinrichtung nach Anspruch 4, **dadurch gekennzeichnet, dass** die beiden Auszugsysteme (12a; 12b) einander zugewandt angeordnet sind und einen rechteckförmigen Querschnitt der Verstelleinrichtung (11) bilden.

6. Verstelleinrichtung nach einem der Ansprüche 1 bis 5, **dadurch gekennzeichnet, dass** die Führungsabschnitte (13a; 13b) mit in Auszugsrichtung beabstandeten Führungseinrichtungen (20), insbesondere Führungsrollen oder Führungsbuchsen (20a; 20b), versehen sind, die mit Führungsausnehmungen (21), insbesondere langlochartigen Führungsausnehmungen, der Auszugsabschnitte (14a; 14b) zusammenwirken.

7. Verstelleinrichtung nach Anspruch 6, **dadurch gekennzeichnet, dass** die Führungseinrichtungen (20) an den seitlichen Schenkeln der Führungsabschnitte (13a; 13b) und die Führungsausnehmungen (21) an den seitlichen Schenkeln der Auszugsabschnitte (14a; 14b) angeordnet sind.

8. Verstelleinrichtung nach Anspruch 6 oder 7, **dadurch gekennzeichnet, dass** zumindest zwischen einem seitlichen Schenkel eines Auszugsabschnitts (14a; 14b) und einem zugeordneten seitlichen Schenkel des Führungsabschnitts (13a; 13b) ein Abstandselement und/oder Gleitelement (22a; 22b) angeordnet ist.

9. Verstelleinrichtung nach einem der Ansprüche 1 bis 8, **dadurch gekennzeichnet, dass** für die beiden Auszugsysteme (12a; 12b) eine gemeinsame Verriegelungseinrichtung (50), insbesondere eine Klemmeinrichtung zur kraftschlüssigen Verklemmung, für alle Verstellmöglichkeiten vorgesehen ist, die mit einer Betätigungseinrichtung (51), insbesondere einem Klemmhebel (5), betätigbar ist.

10. Verstelleinrichtung nach Anspruch 9, **dadurch gekennzeichnet, dass** die Klemmeinrichtung zwei Klemmbacken (70, 71) aufweist, wobei eine erste Klemmbacke (71) mit den beiden Führungsabschnitten (13a, 13b) zusammenwirkt und an einem Führungsabschnitt (13a; 13b) befestigt ist, und eine zweite Klemmbacke (70) mit den beiden Auszugsabschnitten (14a, 14b) zusammenwirkt und mittels der Betätigungseinrichtung (51) gegen die erste Klemmbacke (71) verspannbar ist.

11. Verstelleinrichtung nach Anspruch 9, **dadurch gekennzeichnet, dass** die Klemmeinrichtung zwei Klemmstücke (53, 54) aufweist, die auf jeweils einem an einem Führungsabschnitt (13a; 13b) befestigten Bolzen (55a; 55b) gehaltert sind, wobei ein erstes Klemmstück (54) gegen die Bolzen (55a, 55b) abgestützt ist und ein zweites Klemmstück (53) mittels der Betätigungseinrichtung (51) gegen die Auszugsabschnitte (14a, 14b) verspannbar ist.

12. Verstelleinrichtung nach Anspruch 11, **dadurch gekennzeichnet, dass** die Klemmstücke (53, 54) mit mindestens einer langlochartigen Ausnehmung (57) zur Aufnahme eines Bolzens (55a; 55b) versehen sind.

13. Verstelleinrichtung nach Anspruch 11 oder 12, **dadurch gekennzeichnet, dass** die Bolzen (55a, 55b) Bestandteil der Führungseinrichtung (20) sind.

14. Verstelleinrichtung nach einem der Ansprüche 11 bis 13, **dadurch gekennzeichnet, dass** die Führungseinrichtung jeweils mit einer Führungsrolle oder einer Führungsbuchse (20a; 20b) versehen sind, wobei die Bolzen (55a, 55b) zur Halterung der Führungsrolle bzw. Führungsbuchse ausgebildet sind.

15. Verstelleinrichtung nach einem der Ansprüche 11 bis 14, **dadurch gekennzeichnet, dass** die Klemmeinrichtung mit einer Strebe (60) versehen ist, die an einer Schwenkachse (15b; 15a) eines Führungsabschnitts (13b; 13a) schwenkbar angeordnet ist und den an dem zweiten Führungsabschnitt (13a; 13b) angeordneten Bolzen (55a; 55b) in einem Langloch (61) aufnimmt.

16. Verstelleinrichtung nach einem der Ansprüche 11 bis 15, **dadurch gekennzeichnet, dass** die Klemmstücke (53, 54) und/oder die Strebe (60) im Inneren der Verstelleinrichtung (11) angeordnet sind.

17. Verstelleinrichtung nach einem der Ansprüche 1 bis 16, **dadurch gekennzeichnet, dass** zur Unterstützung der Höhenverstellung eine Kraftunterstützungseinrichtung, insbesondere eine Gasdruckfeder (30), vorgesehen ist.

18. Verstelleinrichtung nach Anspruch 17, **dadurch gekennzeichnet, dass** die Gasdruckfeder (30) mit den beiden Befestigungskonsolen (16, 18) verbunden ist und die Verstelleinrichtung (11) in eine ausgefahrene Position der Höhenverstellung (H) beaufschlagt.

19. Verstelleinrichtung nach Anspruch 17 oder 18, **dadurch gekennzeichnet, dass** die Gasdruckfeder (30) im Inneren der Verstelleinrichtung (11) angeordnet ist.

20. Verstelleinrichtung nach einem der Ansprüche 1 bis 19, **dadurch gekennzeichnet, dass** eine Federeinrichtung (40) vorgesehen ist, die die Verstelleinrichtung (11) in eine Vorzugsstellung der Neigungsverstellung (N) beaufschlagt.

21. Verstelleinrichtung nach Anspruch 20, **dadurch gekennzeichnet, dass** die Federeinrichtung (40) von mindestens einer Schenkelfeder (41) gebildet ist, die mit der fahrzeugseitigen Befestigungskonsole (16) und mit einem Auszugsystem (12b), insbesondere dem Führungsabschnitt (13b) des Auszugsystems (12b), in Wirkverbindung steht, um die Verstelleinrichtung (11) in eine aufgerichtete Vorzugsstellung zu beaufschlagen.

22. Verstelleinrichtung nach einem der Ansprüche 1 bis 21, **dadurch gekennzeichnet, dass** ein Halter (45) für eine Kabelschleife eines Verbindungskabels (48) der Bedieneinrichtung vorgesehen ist.

23. Verstelleinrichtung nach Anspruch 22, **dadurch gekennzeichnet, dass** der Halter (45) von einem im Inneren der Verstelleinrichtung (11) angeordneten Haltstift (46) gebildet ist, der an einem Führungsabschnitt (13a; 13b) befestigt ist.

24. Verstelleinrichtung nach einem der Ansprüche 6 bis 23, **dadurch gekennzeichnet, dass** die langlochartigen Führungsausnehmungen (21) und die Führungseinrichtungen (20) Anschläge für die Höhenverstellung (H) bilden.

25. Verstelleinrichtung nach einem der Ansprüche 1 bis 24, **dadurch gekennzeichnet, dass** zwischen einem stirnseitigen Bereich eines Führungsabschnitts (13a) und der fahrzeugseitigen Befestigungskonsole (16) Anschläge für die Neigungsverstellung (N) ausgebildet sind.

26. Verstelleinrichtung nach einem der Ansprüche 15 bis 24, **dadurch gekennzeichnet, dass** die Anschläge der Neigungsverstellung (N) von dem Langloch (61) in der Strebe (60) und dem in dem Langloch (61) geführten Bolzen (55a; 55b) der Klemmeinrichtung gebildet sind.

27. Verstelleinrichtung nach einem der Ansprüche 1 bis 26, **dadurch gekennzeichnet, dass** zwischen den stirnseitigen Bereichen der Auszugabschnitte (14a, 14b) und der bedieneinrichtungsseitigen Befestigungskonsole (18) jeweils ein Anschlag für die Kippverstellung (K) ausgebildet ist.

## Claims

1. Adjustment device for an operating device of an industrial truck, in particular a control panel of an order picker, the adjustment device having, as adjustment options, vertical adjustment and inclination adjustment as well as tilt adjustment of the operating device, **characterized in that** the adjustment device (11) comprises two extension systems (12a, 12b), which are arranged in the form of a parallelogram, can be actuated separately from one another and each comprise a guide section (13a; 13b) and an extension section (14a; 14b) which can move linearly with respect to the guide section (13a; 13b), the guide sections (13a; 13b) each being mounted pivotably at one end on a fixing bracket (16), and the extension sections (14a; 14b) each being mounted pivotably at an opposite end on a further fixing bracket (18).

2. Adjustment device according to Claim 1, **characterized in that** the fixing bracket (16) is provided for fixing to the industrial truck, and the further fixing bracket (18) is provided for accommodating the operating device.

3. Adjustment device according to Claim 1 or 2, **characterized in that** the swivel pins (15a; 15b) of the two guide section (13a; 13b) and the swivel pins (17a; 17b) of the two extension sections (14a; 14b) are each arranged inclined with respect to a horizontal plane, in particular with respect to the corresponding fixing bracket (16; 18).

4. Adjustment device according to one of Claims 1 to 3, **characterized in that** the extension systems (12a; 12b) are each formed by a guide section (13a; 13b) in the form of a U in cross section and an extension section (14a; 14b) in the form of a U in cross section, said guide and extension sections being arranged so as to run one inside the other.

5. Adjustment device according to Claim 4, **characterized in that** the two extension systems (12a; 12b) are arranged so as to face one another and form a rectangular cross section of the adjustment device (11).

6. Adjustment device according to one of Claims 1 to 5, **characterized in that** the guide sections (13a; 13b) are provided with guide devices (20), in particular guide rollers or guide bushes (20a; 20b), which are spaced apart in the extension direction and interact with guide cutouts (21), in particular slot-like guide cutouts, in the extension sections (14a; 14b).

7. Adjustment device according to Claim 6, **characterized in that** the guide devices (20) are arranged on the lateral limbs of the guide sections (13a; 13b), and the guide cutouts (21) are arranged on the lateral limbs of the extension sections (14a; 14b).

8. Adjustment device according to Claim 6 or 7, **characterized in that** a spacer element and/or sliding element (22a; 22b) is arranged at least between one lateral limb of an extension section (14a; 14b) and an associated lateral limb of the guide section (13a; 13b)

9. Adjustment device according to one of Claims 1 to 8, **characterized in that** a common locking device (50), in particular a clamping device for force-fitting clamping, is provided for the two extension systems (12a; 12b) for all adjustment options, said locking device being actuatable by means of an activating device (51), in particular a clamping lever (5).

10. Adjustment device according to Claim 9, **characterized in that** the clamping device has two clamping jaws (70, 71), a first clamping jaw (71) interacting with the two guide sections (13a, 13b) and being fixed to a guide section (13a; 13b), and a second clamping jaw (70) interacting with the two extension sections (14a, 14b) and it being possible for said second clamping jaw to be braced against the first clamping jaw (71) by means of the activating device (51).

11. Adjustment device according to Claim 9, **characterized in that** the clamping device has two clamping pieces (53, 54), which are held on in each case one bolt (55a; 55b) fixed to a guide section (13a; 13b), a first clamping piece (54) being supported against the bolts (55a, 55b), and it being possible for a second clamping piece (53) to be braced against the extension sections (14a, 14b) by means of the activating device (51).

12. Adjustment device according to Claim 11, **characterized in that** the clamping pieces (53, 54) are provided with at least one slot-like cutout (57) for accommodating a bolt (55a; 55b).

13. Adjustment device according to Claim 11 or 12, **characterized in that** the bolts (55a, 55b) are part of the guide device (20).

14. Adjustment device according to one of Claims 11 to 13, **characterized in that** the guide devices are each provided with a guide roller or a guide bush (20a; 20b), the bolts (55a, 55b) being formed so as to hold the guide roller or guide bush, respectively.

15. Adjustment device according to one of Claims 11 to 14, **characterized in that** the clamping device is provided with a strut (60), which is arranged pivotably on a swivel pin (15b; 15a) of a guide section (13b; 13a) and accommodates the bolt (55a; 55b), arranged on the second guide section (13a; 13b), in a slot (61).

16. Adjustment device according to one of Claims 11 to 15, **characterized in that** the clamping pieces (53, 54) and/or the struts (60) are arranged in the interior of the adjustment device (11).

17. Adjustment device according to one of Claims 1 to 16, **characterized in that** a power assistance device, in particular a gas pressure spring (30), is provided for assisting the vertical adjustment.

18. Adjustment device according to Claim 17, **characterized in that** the gas pressure spring (30) is connected to the two fixing brackets (16, 18) and acts upon the adjustment device (11) so as to move it into an extended position of the vertical adjustment (H).

19. Adjustment device according to Claim 17 or 18, **characterized in that** the gas pressure spring (30) is arranged in the interior of the adjustment device (11).

20. Adjustment device according to one of Claims 1 to 19, **characterized in that** a spring device (40) is provided which acts upon the adjustment device (11) so as to move it into a preferred position of the inclination adjustment (N).

21. Adjustment device according to Claim 20, **characterized in that** the spring device (40) is formed by at least one leg spring (41), which is operatively connected to the vehicle-side fixing bracket (16) and to an extension system (12b), in particular the guide section (13b) of the extension system (12b), in order to act on the adjustment device (11) so as to move it into an upright preferred position.

22. Adjustment device according to one of Claims 1 to 21, **characterized in that** a holder (45) is provided for a cable loop of a connecting cable (48) of the operating device.

23. Adjustment device according to Claim 22, **characterized in that** the holder (45) is formed by a holding pin (46), which is arranged in the interior of the adjustment device (11) and is fixed on a guide section (13a; 13b).

24. Adjustment device according to one of Claims 6 to 23, **characterized in that** the slot-like guide cutouts (21) and the guide devices (20) form stops for the vertical adjustment (H).

25. Adjustment device according to one of Claims 1 to 24, **characterized in that** stops for the inclination adjustment (N) are formed between an end-side region of a guide section (13a) and the vehicle-side fixing bracket (16).

26. Adjustment device according to one of Claims 15 to 24, **characterized in that** the stops of the inclination adjustment (N) are formed by the slot (61) in the strut (60) and the bolt (55a; 55b), guided in the slot (61), of the clamping device.

27. Adjustment device according to one of Claims 1 to 26, **characterized in that** in each case one stop for the tilt adjustment (K) is formed between the end-side regions of the extension sections (14a, 14b) and the operating-device-side fixing bracket (18).

## Revendications

1. Dispositif de réglage pour un dispositif de commande d'un chariot de manutention, en particulier un panneau de commande pour un chariot élévateur de préparation de commandes, le dispositif de réglage présentant en tant que possibilités de réglage un réglage en hauteur et un réglage d'inclinaison ainsi qu'un réglage de basculement, **caractérisé en ce que** le dispositif de réglage (11) comprend deux systèmes d'extraction (12a, 12b) disposés en forme de parallélogramme et pouvant être commandés séparément l'un de l'autre, qui comprennent à chaque fois une portion de guidage (13a ; 13b) et une portion d'extraction (14a ; 14b) déplaçable linéairement par rapport à la portion de guidage (13a ; 13b), les portions de guidage (13a ; 13b) étant montées de manière pivotante à chaque fois à une extrémité sur une console de fixation (16) et les portions d'extraction (14 ; 14b) étant montées de manière pivotante à chaque fois à une extrémité opposée sur une autre console de fixation (18).

2. Dispositif de réglage selon la revendication 1, **caractérisé en ce que** la console de fixation (16) est prévue pour la fixation sur le chariot de manutention et l'autre console de fixation (18) est prévue pour recevoir le dispositif de commande.

3. Dispositif de réglage selon la revendication 1 ou 2, **caractérisé en ce que** les axes de pivotement (15a ; 15b) des deux portions de guidage (13a ; 13b) et les axes de pivotement (17a ; 17b) des deux portions d'extraction (14a ; 14b) sont disposées à chaque fois de manière inclinée par rapport à un plan horizontal, en particulier par rapport à la console de fixation correspondante (16 ; 18).

4. Dispositif de réglage selon l'une quelconque des revendications 1 à 3, **caractérisé en ce que** les systèmes d'extraction (12a; 12b) sont formés à chaque fois par une portion de guidage (13a ; 13b) en forme de U en section transversale, et par une portion d'extraction (14a ; 14b) en forme de U en section transversale, lesquelles sont disposées de manière à glisser l'une dans l'autre.

5. Dispositif de réglage selon la revendication 4, **caractérisé en ce que** les deux systèmes d'extraction (12a ; 12b) sont disposés de manière tournée l'un vers l'autre et forment une section transversale de forme rectangulaire du dispositif de réglage (11).

6. Dispositif de réglage selon l'une quelconque des revendications 1 à 5, **caractérisé en ce que** les portions de guidage (13a ; 13b) sont pourvues de dispositifs de guidage (20) espacés dans la direction d'extraction, en particulier de galets de guidage ou de manchons de guidage (20a ; 20b), qui coopèrent avec des évidements de guidage (21), en particulier des évidements de guidage de type trous oblongs, des portions d'extraction (14a ; 14b).

7. Dispositif de réglage selon la revendication 6, **caractérisé en ce que** les dispositifs de guidage (20) sont disposés sur les branches latérales des portions de guidage (13a ; 13b) et les évidements de guidage (21) sont disposés sur les branches latérales des portions d'extraction (14a ; 14b).

8. Dispositif de réglage selon la revendication 6 ou 7, **caractérisé en ce qu'**au moins entre une branche latérale d'une portion d'extraction (14a ; 14b) et une branche latérale associée de la portion de guidage (13a ; 13b) est disposé un élément d'espacement et/ou un élément de glissement (22a ; 22b).

9. Dispositif de réglage selon l'une quelconque des revendications 1 à 8, **caractérisé en ce que** pour les deux systèmes d'extraction (12a ; 12b) est prévu un dispositif de verrouillage commun (50), en particulier un dispositif de serrage pour le blocage par engagement par force, pour toutes les possibilités de réglage, lequel peut être actionné au moyen d'un dispositif de commande (51), en particulier un levier de serrage (5).

10. Dispositif de réglage selon la revendication 9, **caractérisé en ce que** le dispositif de serrage présente deux mâchoires de serrage (70, 71), une première mâchoire de serrage (71) coopérant avec les deux portions de guidage (13a, 13b) et étant fixée sur une portion de guidage (13a ; 13b) et une deuxième mâchoire de serrage (70) coopérant avec les deux portions d'extraction (14a, 14b) et pouvant être serrée contre la première mâchoire de serrage (71) au moyen du dispositif de commande (51).

11. Dispositif de réglage selon la revendication 9, **caractérisé en ce que** le dispositif de serrage présente deux pièces de serrage (53, 54), qui sont retenues chacune sur un boulon (55a ; 55b) fixé sur une portion de guidage (13a ; 13b), une première pièce de serrage (54) étant supportée contre le boulon (55a, 55b) et une deuxième pièce de serrage (53) pouvant être serrée contre les portions d'extraction (14a, 14b) au moyen du dispositif de commande (51).

12. Dispositif de réglage selon la revendication 11, **caractérisé en ce que** les pièces de serrage (53, 54) sont pourvues d'au moins un évidement (57) de type trou oblong pour recevoir un boulon (55a ; 55b).

13. Dispositif de réglage selon la revendication 11 ou 12, **caractérisé en ce que** les boulons (55a, 55b) font partie du dispositif de guidage (20).

14. Dispositif de réglage selon l'une quelconque des revendications 11 à 13, **caractérisé en ce que** les dispositifs de guidage sont pourvus à chaque fois d'un galet de guidage ou d'un manchon de guidage (20a ; 20b), les boulons (55a, 55b) étant réalisés de manière à retenir le galet de guidage ou le manchon de guidage.

15. Dispositif de réglage selon l'une quelconque des revendications 11 à 14, **caractérisé en ce que** le dispositif de serrage est pourvu d'un renfort (60) qui est disposé de manière à pouvoir pivoter sur un axe de pivotement (15b ; 15a) d'une portion de guidage (13b ; 13a) et qui reçoit dans un trou oblong (61) le boulon (55a ; 55b) disposé sur la deuxième portion de guidage (13a ; 13b).

16. Dispositif de réglage selon l'une quelconque des revendications 11 à 15, **caractérisé en ce que** les pièces de serrage (53, 54) et/ou le renfort (60) sont disposés à l'intérieur du dispositif de réglage (11).

17. Dispositif de réglage selon l'une quelconque des revendications 1 à 16, **caractérisé en ce que** pour le support du réglage en hauteur, on prévoit un dispositif d'assistance de force, en particulier un ressort de compression à gaz (30).

18. Dispositif de réglage selon la revendication 17, **caractérisé en ce que** le ressort de compression à gaz (30) est connecté aux deux consoles de fixation (16, 18) et sollicite le dispositif de réglage (11) dans une position sortie du réglage en hauteur (H).

19. Dispositif de réglage selon la revendication 17 ou 18, **caractérisé en ce que** le ressort de compression à gaz (30) est disposé à l'intérieur du dispositif de réglage (11).

20. Dispositif de réglage selon l'une quelconque des revendications 1 à 19, **caractérisé en ce qu'**il est prévu un dispositif de ressort (40) qui sollicite le dispositif de réglage (11) dans une position préférentielle de réglage d'inclinaison (N).

21. Dispositif de réglage selon la revendication 20, **caractérisé en ce que** le dispositif de ressort (40) est formé par au moins un ressort à branches (41) qui est en liaison fonctionnelle avec la console de fixation (16) du côté du véhicule et avec un système d'extraction (12b), en particulier la portion de guidage (13b) du système d'extraction (12b), afin de solliciter le dispositif de réglage (11) dans une position préférentielle redressée.

22. Dispositif de réglage selon l'une quelconque des revendications 1 à 21, **caractérisé en ce qu'**il est prévu un dispositif de retenue (45) pour une boucle de câble d'un câble de connexion (48) du dispositif de commande.

23. Dispositif de réglage selon la revendication 22, **caractérisé en ce que** le dispositif de retenue (45) est formé par une goupille de retenue (46) disposée à l'intérieur du dispositif de réglage (11), laquelle est fixée sur une portion de guidage (13a ; 13b).

24. Dispositif de réglage selon l'une quelconque des revendications 6 à 23, **caractérisé en ce que** les évidements de guidage (21) de type trous oblongs et les dispositifs de guidage (20) forment des butées pour le réglage en hauteur (H).

25. Dispositif de réglage selon l'une quelconque des revendications 1 à 24, **caractérisé en ce qu'**entre une région du côté frontal d'une portion de guidage (13a) et la console de fixation (16) du côté du véhicule sont réalisées des butées pour le réglage d'inclinaison (N).

26. Dispositif de réglage selon l'une quelconque des revendications 15 à 24, **caractérisé en ce que** les butées du réglage d'inclinaison (N) sont formées par le trou oblong (61) dans le renfort (60) et par le boulon (55a ; 55b) du dispositif de serrage guidé dans le trou oblong (61).

27. Dispositif de réglage selon l'une quelconque des revendications 1 à 26, **caractérisé en ce qu'**entre les régions du côté frontal des portions d'extraction (14a, 14b) et la console de fixation (18) du côté du dispositif de commande, est à chaque fois réalisée une butée pour le réglage du basculement (K).
